# EUROPÄISCHE PATENTSCHRIFT

(11) **EP 1 618 777 B1**
(45) Veröffentlichungstag und Bekanntmachung des Hinweises auf die Patenterteilung: **14.11.2007**
(21) Anmeldenummer: 05105259.5
(22) Anmeldetag: 15.06.2005
(51) Int. Cl.: A01D 43/08

(54) **Austrageinrichtung einer landwirtschaftlichen Erntemaschine**
Discharge device of an agricultural harvesting machine
Dispositif de décharge d'une récolteuse agricole

(30) Priorität: 20.07.2004 DE 102004035158
(43) Veröffentlichungstag der Anmeldung: 25.01.2006
(73) Patentinhaber: DEERE & COMPANY, Moline, Illinois 61265-8098 (US)
(72) Erfinder: Hettiger, Marcus, 66115, Saarbrücken (DE)
(74) Vertreter: Holst, Sönke

(56) Entgegenhaltungen:
- EP-A- 1 040 745
- CA-A1- 2 089 211
- DE-A1- 19 641 211
- US-A- 4 300 726

## Beschreibung

Die Erfindung betrifft eine Austrageinrichtung einer landwirtschaftlichen Erntemaschine, mit einem unteren, mit einem Rahmen der Erntemaschine verbundenen Auswurfturm und einem oberen, das Auswurfende der Austrageinrichtung umfassenden Auswurfkrümmer, der durch einen Drehkranz um eine sich vertikal oder näherungsweise vertikal erstreckende Drehachse gegenüber dem Auswurfturm drehbar gelagert ist.

Bei der Ernte von landwirtschaftlichen Gütern auf einem Feld ist es gängige Praxis, dass eine Erntemaschine ein neben der Erntemaschine herfahrendes Transportfahrzeug mit geerntetem Gut belädt. Das Transportfahrzeug, beispielsweise ein Schlepper mit Anhänger oder ein Lastwagen, wird durch eine Austrageinrichtung der Erntemaschine mit dem geernteten Gut beladen, beispielsweise bei einem Feldhäcksler durch einen Austragschacht und bei einem Mähdrescher durch ein Entladerohr. Der bewegliche Teil der Austrageinrichtung, der in der Patentliteratur auch als Auswurfkrümmer, Auswurfbogen oder Überladeeinrichtung bezeichnet wird, wird von unten her durch einen Auswurfturm mit Erntegut beschickt und ist in der Regel um eine vertikale Achse drehbar an der Erntemaschine befestigt und zwischen einer Ruhestellung, in der er etwa parallel zur Längsachse der Erntemaschine orientiert ist, und einer Arbeitsposition verschwenkbar, in der er sich quer zur Fahrtrichtung der Erntemaschine erstreckt. Zusätzlich kann die Höhe des abgabeseitigen Endes der Austrageinrichtung variierbar sein, wie auch die Position einer Auswurfklappe, welche den Winkel definiert, unter dem das geerntete Gut abgegeben wird.

Bei einigen Typen von Feldhäckslern ist die Drehachse der Austrageinrichtung nicht exakt vertikal orientiert, sondern um einen bestimmten Winkel nach hinten geneigt, um den ohne Kollision mit der Fahrerkabine möglichen Drehbereich der Austrageinrichtung zu vergrößern. Dadurch ändert sich bei derartigen Feldhäckslern bei einer Drehung der Austrageinrichtung um die Hochachse die Auswurfhöhe, was insbesondere bei Transportwagen nachteilig ist, die von der Seite her zu befüllen sind, da nach einer Drehung der Austrageinrichtung um die Hochachse eine manuelle Höhenverstellung erforderlich werden kann. Derartige Transportwagen werden insbesondere in Kalifornien, USA, verwendet.

Es wurde vorgeschlagen, die Länge der Austrageinrichtung zu ändern, um sie an das verwendete Transportfahrzeug und/oder den jeweiligen Erntevorsatz anzupassen. Dazu kann die Austrageinrichtung aus einzelnen, wählbaren Sektionen zusammengesetzt sein (DE 196 41 211 A) oder das Austragende ist in Längsrichtung verschiebbar angebracht (DE 101 34 137 A, DE 102 11 706 A). Da die Verlängerungselemente aber stets stromab der Drehlagerung der Austrageinrichtung angeordnet sind, ändern sie die Orientierung der Drehachse nicht.

Weiterhin ist es bekannt, in die Austrageinrichtung separate Schwenklager einzufügen, mit denen die Austrageinrichtung zum Straßentransport in eine abgesenkte Stellung verschwenkt werden kann. Auch hier bleibt die Orientierung der vertikalen oder etwa vertikalen Drehachse der Austrageinrichtung im Betrieb konstant.

Das der Erfindung zu Grunde liegende Problem wird darin gesehen, eine Austrageinrichtung einer Erntemaschine bereitzustellen, die auf einfache Weise zwischen einer geneigten Orientierung der Drehachse, die einen größeren Drehbereich ermöglicht, auf eine vertikale Drehachse umgestellt werden kann, insbesondere um beim seitlichen Beladen von Transportfahrzeugen eine Nachstellung der Höhe des Austragendes zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Auswurfturm ist mit dem Rahmen der Erntemaschine verbunden. Der Drehkranz lagert den Auswurfkrümmer der Austrageinrichtung um eine etwa oder exakt vertikale Achse drehbar am Auswurfturm. Es wird vorgeschlagen, ein herausnehmbares Zwischenelement zwischen dem Auswurfturm und dem Drehkranz anzubringen. Das Zwischenelement weist eine am Auswurfturm befestigte Fläche und eine am Drehkranz befestigte Fläche auf. Beide Flächen sind derart zueinander ausgerichtet, dass sich bei montiertem Zwischenelement ein Winkel zwischen der Längsachse des Auswurfturms und der Drehachse des Drehkranzes ergibt.

Auf diese Weise lässt sich durch eine einfache Umbaumaßnahme, nämlich einen Ein- oder Ausbau des Zwischenelements, die Orientierung der Drehachse des Drehkranzes verändern. Das Zwischenelement kann bereits bei der Herstellung der Erntemaschine montiert oder in einer nachträglichen Umbaumaßnahme eingefügt bzw. ausgetauscht werden.

In der Regel ist die Oberkante oder Oberseite des Auswurfturms orthogonal zu seiner Längsachse angeordnet. Dann schließen die beiden Flächen des Zwischenelements miteinander einen Winkel ein und der Drehkranz ist in einer Ebene angeordnet, die sich im Winkel zur Oberkante des Auswurfturms erstreckt.

Um ohne Kollision mit der Fahrerkabine einen möglichst großen Drehwinkelbereich der Austrageinrichtung um die Hochachse zu erzielen, bietet es sich an, den Auswurfturm mit einer Längsachse auszustatten, die gegenüber der Horizontalen entgegen der Fahrtrichtung um einen Winkel von beispielsweise 8° nach hinten geneigt ist, und die Oberkante oder obere Endfläche des Auswurfturms orthogonal zu dieser Längsachse anzuordnen. Wird der Drehkranz direkt oder über ein Zwischenelement, das zueinander parallel verlaufende Endflächen aufweist, an der oberen Endfläche des Auswurfturms montiert, verläuft die Drehachse des Drehkranzes ebenfalls um diesen Winkel nach hinten geneigt. Dadurch erhält man die gewünschte, nach hinten geneigte Orientierung der Drehachse. Wird hingegen das abgewinkelte Zwischenelement mit einem nach vorn gerichteten Neigungswinkel zwischen seinen Endflächen montiert, erhält man eine horizontale obere Endfläche des Zwischenelements und eine exakt vertikale Drehachse des Drehkranzes, die ein seitliches Befüllen von Transportfahrzeugen erleichtert. Es wäre im Übrigen auch denkbar, sich die Winkel des Auswurfturms und des abgewinkelten Zwischenelements addieren zu lassen, indem man das Zwischenelement um 180° dreht. Dadurch erhält man eine noch weiter nach hinten geneigte Drehachse, die den möglichen Schwenkbereich der Austrageinrichtung weiter vergrößert, bei der allerdings die Höhe des Auswurfendes noch stärker vom Drehwinkel abhängt.

Bei einer anderen Ausführungsform könnte die Längsachse des Auswurfturms exakt vertikal angeordnet sein, so dass seine Oberkante horizontal verläuft. Ohne Zwischenelement oder mit einem Zwischenelement, dessen Endflächen parallel zueinander verlaufen, ergibt sich dann eine vertikale Drehachse des Drehkranzes. Die nach hinten geneigte Drehachse lässt sich durch Einbau des beschriebenen, abgewinkelten Zwischenstücks erzielen.

Wie oben erwähnt, kann anstelle des abgewinkelten Zwischenstücks auch ein gerades Zwischenstück mit parallel verlaufenden Endflächen zwischen dem unteren Abschnitt der Austrageinrichtung und der Drehlagerung eingefügt werden. Bei geeigneter Dimensionierung bleibt die Höhe des Drehkranzes und der Austrageinrichtung im Wesentlichen unabhängig von der Orientierung der Drehachse des Drehkranzes. Ein Antrieb zum Drehen des oberen Abschnitts der Austrageinrichtung um die Drehachse des Drehkranzes wird zweckmäßigerweise durch flexible Anschlussmittel, insbesondere Schläuche zum Versorgen eines Hydraulikmotors oder flexible Kabel zum Antrieb eines Elektromotors, mit der Energiequelle an Bord der Erntemaschine verbunden.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: einen vergrößerten Ausschnitt aus der Figur 1, in der der obere Bereich des Auswurfturms, ein Zwischenelement mit parallelen Endflächen, der Drehkranz und der untere Bereich des Auswurfkrümmers gezeigt ist,
- Fig. 3: eine Darstellung entsprechend der Figur 2, wobei jedoch ein Zwischenelement mit im Winkel angeordneten Endflächen vorhanden ist,
- Fig. 4: eine perspektivische Ansicht des Winkelelements aus Figur 2, und
- Fig. 5: eine perspektivische Ansicht des Winkelelements aus Figur 3.

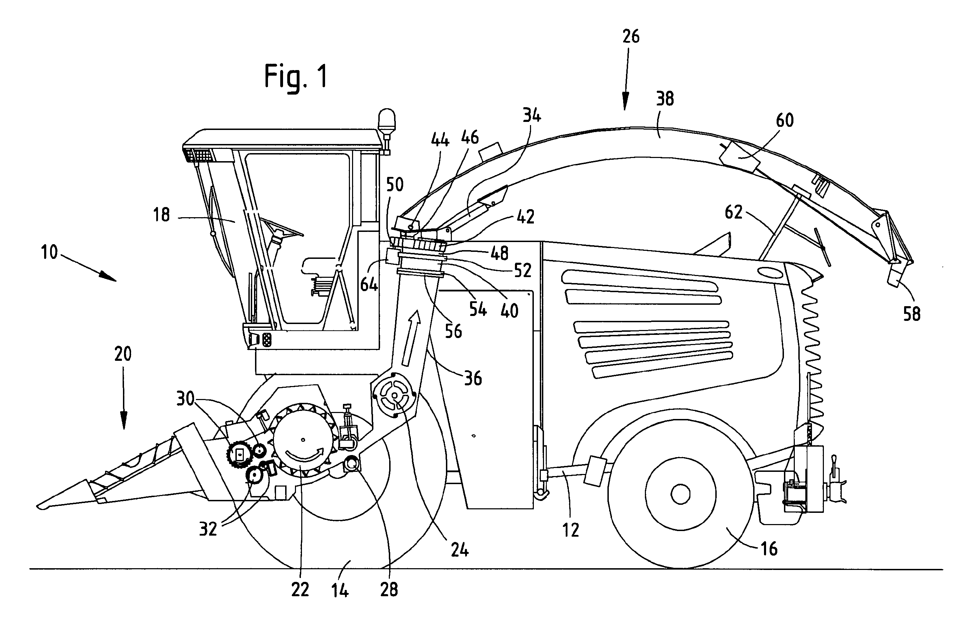

Eine in der Figur 1 gezeigte Erntemaschine 10 in der Art eines selbstfahrenden Feldhäckslers baut sich auf einem Rahmen 12 auf, der von angetriebenen vorderen Rädern 14 und lenkbaren rückwärtigen Rädern 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20, die in der dargestellten Ausführungsform ein Maisgebiss ist, vom Boden aufgenommenes Gut, z. B. Mais, Getreide oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über eine drehbare Austrageinrichtung 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Austrageinrichtung 26 setzt sich aus einem unteren Abschnitt und einem oberen Abschnitt zusammen, der gegenüber dem unteren Abschnitt beweglich ist. Der untere Abschnitt umfasst einen Auswurfturm 36, der sich unmittelbar stromab der Fördervorrichtung 24 nach oben erstreckt. Am oberen Ende des Auswurfturms 36 ist ein Zwischenstück 40 befestigt, an dessen Oberseite wiederum ein Drehkranz 42 angebracht ist. Der Drehkranz 42 trägt den oberen Abschnitt der Austrageinrichtung 26, der in Form eines Auswurfkrümmers 38 ausgeführt ist.

Anhand der Figur 1 ist erkennbar, dass der Auswurfkrümmer 38 an seinem unteren Ende durch einen Aktor 34 um eine (je nach Drehposition des Auswurfkrümmers 38 um die Hochachse mehr oder weniger) horizontale Achse 44 verschwenkbar ist. Eine Halterung 46 mit die Achse 44 definierenden Lagerzapfen, an denen der Auswurfkrümmer 38 drehbar angelenkt ist, erstreckt sich jeweils zwischen einem der beiden unteren Seitenwandbereiche des Auswurfkrümmers 38 und dem Drehkranz 42. Der Drehkranz 42 setzt sich aus einem inneren rohrförmigen Element, das an einem unteren Flansch 48 befestigt ist, und einem äußeren Zahnring zusammen, an dem die Halterung 46 befestigt ist und der gegenüber inneren Element des Drehkranzes 42 um die Längsachse des Drehkranzes 42 drehbar gelagert ist. Zur Lagerung des äußeren Zahnrings am inneren Element können Kugellager verwendet werden, wie sie in der US 3 844 632 A beschrieben werden. Der Zahnring ist an seinem Umfang mit Zähnen versehen. Mit den Zähnen des Zahnrings kämmt ein Zahnrad 50 oder ein Schneckenrad (nicht gezeigt), das durch einen hydraulisch oder elektrisch betriebenen Aktor 64 in Form eines Motors in Drehung versetzbar ist. Dadurch kann der Zahnring des Drehkranzes 42 und mit ihm die Halterung 46 und der Auswurfkrümmer 38 um eine fast vertikale, jedoch leicht entgegen der Fahrtrichtung der Erntemaschine 10 nach hinten geneigte Drehachse gedreht werden.

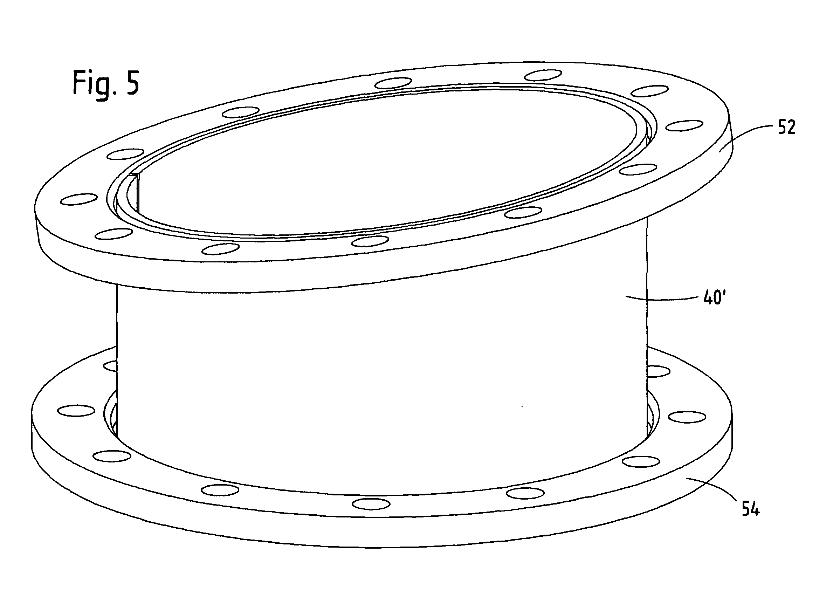

Der an der Unterseite des inneren Elements des Drehkranzes 42 befestigte Flansch 48 ist durch Schrauben mit einem Flansch 52 an der Oberseite des rohrförmigen Zwischenstücks 40 verbunden. An der Unterseite des rohrförmigen Zwischenstücks 40 ist ein weiterer Flansch 54 angebracht, der mit einem an der Oberseite des Auswurfturms 36 fixierten Flansch 56 verbunden ist. Die Flansche 52, 54 sind durch Versteifungsrippen 66 untereinander verbunden, die auch mit der Außenseite des rohrförmigen Körpers des Zwischenstücks 40 verschweißt sind. Derartige Versteifungsrippen 66 können auch beim Zwischenstück 40' nach Figur 5 angebracht werden.

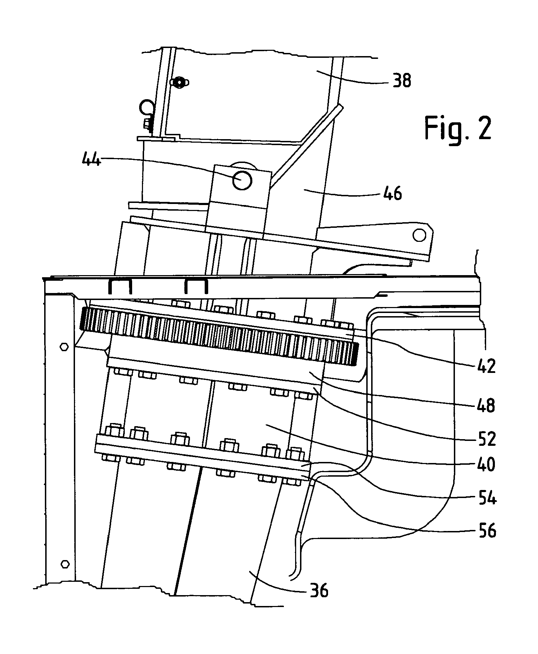

Der Auswurfturm 36 ist wiederum am Gehäuse der Fördervorrichtung 24 und/oder direkt am Rahmen 12 befestigt. Auch der das nicht rotierende innere Element des Drehkranzes 42 kann am Rahmen 12 fixiert sein. Die Flansche 48, 52 und 54, 56 und die ihre Unterkanten bzw. Oberkanten definierenden Flächen sind sämtlich parallel zueinander ausgerichtet. Die Längsachsen des Auswurfturms 36 und des Zwischenstücks 40 sowie die Drehachse des Drehkranzes 42 verlaufen koaxial und näherungsweise vertikal, jedoch leicht entgegen der Fahrtrichtung der Erntemaschine 10 nach hinten geneigt, wie insbesondere anhand der Figuren 1 und 2 erkennbar ist.

Der Auswurfkrümmer 38 hat den Querschnitt eines umgekehrten U und ist daher im Wesentlichen nach unten geöffnet. Ein Erntegutverlust ist damit nicht verbunden, da das Erntegut durch die Zentrifugalkraft an der Oberseite des Deckblechs des Auswurfkrümmers 38 entlang gleitet und durch die Seitenbleche des Auswurfkrümmers 38 in seitlicher Richtung geführt wird. Weiterhin ist am abgabeseitigen Ende des Auswurfkrümmers 38 eine schwenkbare Auswurfklappe 58 angelenkt, deren Position durch einen Aktor 60 veränderbar ist.

Die Aktoren 34, 60 und 64 ermöglichen somit eine Verstellung der Position des Auswurfkrümmers 38, um die Position festzulegen, an der das Erntegut auf einem Transportfahrzeug auftrifft. Der Aktor 64 dreht den Auswurfkrümmer 38 um eine etwa vertikal verlaufende Achse, während der Aktor 34 durch Verschwenken um die näherungsweise horizontale Achse 44 die Höhe des Auswurfendes vorgibt. Die dortige Auswurfrichtung wird durch die mit dem Aktor 60 bewegbare Auswurfklappe 58 vorgegeben. Die Ansteuerung der Aktoren 34, 44 und 60 kann über geeignete Eingabemittel durch einen Bediener in der Fahrerkabine 18 erfolgen. Es besteht auch die Möglichkeit, vorprogrammierte Positionen anzusteuern oder den Auswurfkrümmer 38 durch geeignete Sensoren selbsttätig auszurichten, so dass das Erntegut auf das Transportfahrzeug gelangt. In der in Figur 1 dargestellten Stellung ruht der Auswurfkrümmer 38 endseitig auf einer Ablageeinrichtung 62 am rückwärtigen Ende der Erntemaschine 10, bei der es sich um ein aus Rohren zusammengesetztes Gestell handelt. Diese Stellung kann zur Fahrt auf einem Feld verwendet werden, falls gerade nicht geerntet wird, und zur Fahrt auf einer Straße.

Wie bereits erwähnt, sind die Längsachsen des Auswurfturms 36 und des Zwischenelements 40 sowie die Drehachse des Drehkranzes 42 nicht exakt vertikal, sondern um einen Winkel von etwa 8° leicht nach hinten geneigt. Dadurch erzielt man einen etwas größeren Drehbereich des Auswurfkrümmers 38 um die Drehachse des Drehkranzes 42, hat jedoch den Nachteil, dass sich die Höhe des Auswurfendes des Auswurfkrümmers 38 beim Drehen um den Drehkranz 42 ändert. Dieser Nachteil ist bei den meisten Erntemaschinen hinnehmbar, da die Transportfahrzeuge in den meisten Fällen von oben her befüllt werden.

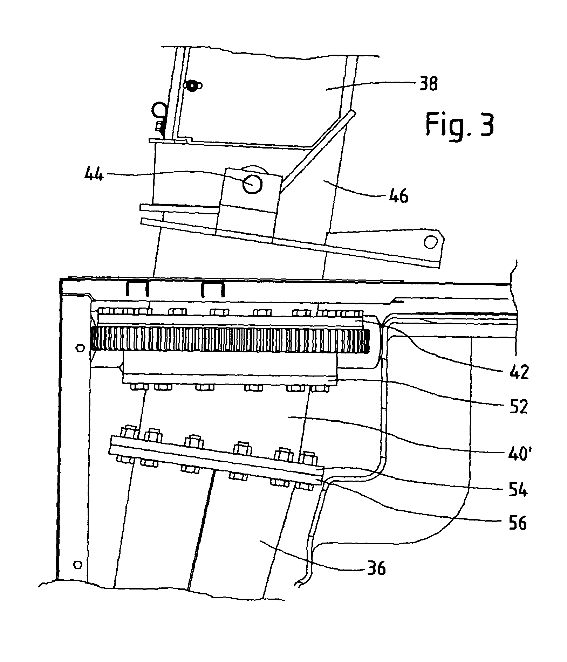

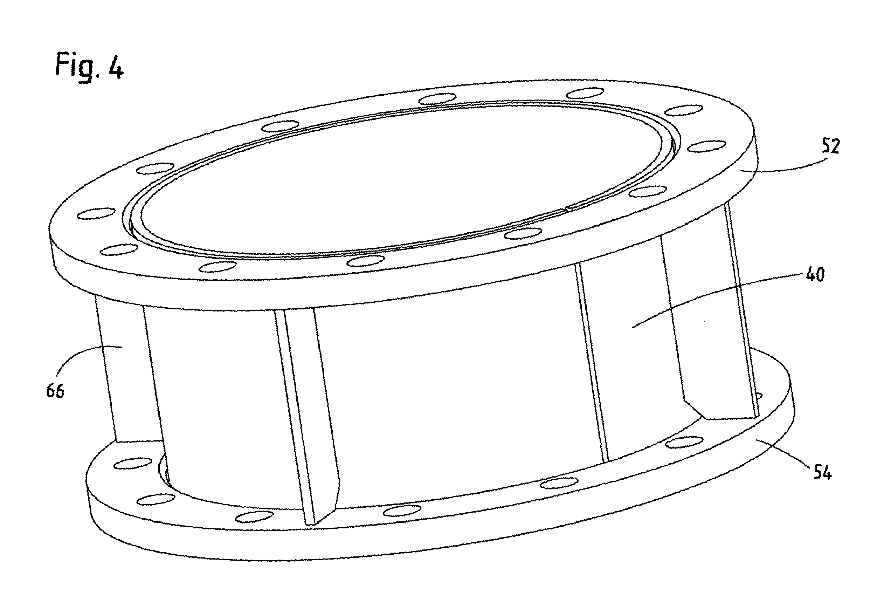

In manchen Gebieten ist allerdings ein seitliches Befüllen der Transportfahrzeuge die Regel. Um dort die Drehwinkelabhängigkeit der Höhe des Auswurfendes des Auswurfkrümmers 38 zu vermeiden, wird vorgeschlagen, an Stelle des in den Figuren 1, 2 und 4 dargestellten Zwischenelements 40 mit parallel verlaufenden Flanschen 52, 54 ein Zwischenelement 40' zu verwenden (s. Figuren 3 und 5), dessen Flansche 52, 54 sich in Ebenen erstrecken, die einen Winkel einschließen. Dieser Winkel entspricht dem Neigungswinkel der Längsachse des Auswurfturms 36 und, da der Flansch 56 an der Oberseite des Auswurfturms 36 orthogonal zu dessen Längsachse verläuft, dem Winkel zwischen der Ebene des Flansches 56 und der Horizontalen. Während die Längsachse des Auswurfturms 36 nach hinten geneigt ist, ist der Winkel zwischen den Flanschen 52, 54 nach vorn gerichtet. Dadurch erreicht man, dass der obere Flansch 52 des Zwischenstücks 40' im montierten Zustand horizontal orientiert ist. Der daran fixierte Drehkranz 42 rotiert demgemäß um eine vertikal verlaufende Drehachse, so dass man eine vom Drehwinkel des Drehkranzes 42 unabhängige Höhe des Auswurfendes des Auswurfkrümmers 38 erhält, was das seitliche Befüllen von Transportfahrzeugen erleichtert.

Das jeweilige Zwischenstück 40 oder 40' kann bereits bei der Herstellung der Erntemaschine 10 oder nachträglich, je nach Kundenwunsch, montiert werden.

Die Erfindung kann auch an Mähdreschern mit verschwenk- und höhenverstellbaren Korntankentladungsschneckenförderern Verwendung finden, insbesondere mit nicht-vertikaler Schwenkachse.

## Patentansprüche

1. Austrageinrichtung (26) einer landwirtschaftlichen Erntemaschine (10), mit einem unteren, mit einem Rahmen (12) der Erntemaschine (10) verbundenen Auswurfturm (36) und einem oberen, das Auswurfende der Austrageinrichtung (26) umfassenden Auswurfkrümmer (38), der durch einen Drehkranz (42) um eine sich vertikal oder näherungsweise vertikal erstreckende Drehachse gegenüber dem Auswurfturm (36) drehbar gelagert ist, **dadurch gekennzeichnet, dass** zwischen dem Auswurfturm (36) und dem Auswurfkrümmer (38) ein demontierbares Zwischenelement (40') eingefügt oder wahlweise einfügbar ist, dessen am Auswurfturm (36) anliegende Fläche und dessen am Drehkranz (42) anliegende Fläche derart zueinander ausgerichtet sind, dass die Längsachse des Auswurfturms (36) und die Drehachse des Drehkranzes (42) einen Winkel einschließen.

2. Austrageinrichtung (26) nach Anspruch 1, **dadurch gekennzeichnet, dass** der Winkel zwischen der am Auswurfturm (36) anliegenden Fläche und der am Drehkranz (42) anliegenden Fläche des Zwischenelements (40') mit dem Winkel zwischen der Längsachse des Auswurfturms (36) und der Drehachse des Drehkranzes (42) übereinstimmt.

3. Austrageinrichtung (26) nach Anspruch 1 oder 2, **dadurch gekennzeichnet, dass** die Oberkante des Auswurfturms (36) um einen Winkel entgegen der Fahrtrichtung nach hinten geneigt ist, und dass dieser Winkel mit dem Winkel zwischen den Flächen des Zwischenelements (40') übereinstimmt, wobei die beiden Winkel entgegengerichtet sind.

4. Austrageinrichtung (26) nach einem der Ansprüche 1 bis 3, **dadurch gekennzeichnet, dass** an Stelle des Zwischenelements (40') zwischen dem Auswurfturm und der Drehlagerung wahlweise ein anderes Zwischenelement (40) einfügbar oder eingefügt ist, dessen am Auswurfturm (36) anliegende Fläche und dessen am Drehkranz (42) anliegende Fläche parallel zueinander ausgerichtet sind.

5. Erntemaschine (10), insbesondere Feldhäcksler, mit einer Austrageinrichtung (26) nach einem der vorhergehenden Ansprüche.

## Claims

1. Discharge device (26) of an agricultural harvester (10), having a lower ejection tower (36) connected to a frame (12) of the harvester (10) and an upper ejection elbow (38) which comprises the ejection end of the discharge device (26) and is mounted rotatably via a slewing ring (42), relative to the ejection tower (36), about a vertically or approximately vertically extending rotational axis, **characterized in that** between the ejection tower (36) and the ejection elbow (38) there is inserted or can optionally be inserted a removable intermediate element (40'), whereof the face bearing against the ejection tower (36) and the face bearing against the slewing ring (42) are mutually aligned in such a way that the longitudinal axis of the ejection tower (36) and the rotational axis of the slewing ring (42) form an angle.

2. Discharge device (26) according to Claim 1, **characterized in that** the angle between the face of the intermediate element (40') which bears against the ejection tower (36) and the face which bears against the slewing ring (42) conforms to the angle between the longitudinal axis of the ejection tower (36) and the rotational axis of the slewing ring (42).

3. Discharge device (26) according to Claim 1 or 2, **characterized in that** the top edge of the ejection tower (36) is inclined to the rear by an angle counter to the direction of travel, and **in that** this angle conforms to the angle between the faces of the intermediate element (40'), the two angles being oppositely directed.

4. Discharge device (26) according to one of Claims 1 to 3, **characterized in that**, in place of the intermediate element (40') between the ejection tower and the rotary mounting, a different intermediate element (40) can be inserted or is inserted, whereof the face bearing against the ejection tower (36) and the face bearing against the slewing ring (42) are aligned parallel to each other.

5. Harvester (10), in particular a forage harvester, having a discharge device (26) according to one of the preceding claims.

## Revendications

1. Dispositif de déchargement (26) d'une machine de récolte (10) agricole, comportant une colonne de déversement (36) inférieure, reliée à un châssis (12) de la machine de récolte (10), et un conduit cintré de déversement (38) supérieur, qui est muni de l'extrémité d'éjection du dispositif de déchargement (26) et qui est monté de manière à pouvoir tourner par rapport à la colonne de déversement (36) par l'intermédiaire d'une couronne rotative (42) autour d'un axe de rotation orienté verticalement ou sensiblement verticalement, **caractérisé en ce qu'**entre la colonne de déversement (36) et le conduit cintré de déversement (38) est inséré ou peut être inséré un élément intermédiaire (40') démontable, dont la surface en appui contre la colonne de déversement (36) et dont la surface en appui contre la couronne rotative (42) sont orientées l'une par rapport à l'autre de telle sorte que l'axe longitudinal de la colonne de déversement (36) et l'axe de rotation de la couronne rotative (42) délimitent un angle.

2. Dispositif de déchargement (26) selon la revendication 1, **caractérisé en ce que** l'angle délimité entre les surfaces de l'élément intermédiaire (40'), à savoir celle en appui contre la colonne de déversement (36) et celle en appui contre la couronne rotative (42), coïncide avec l'angle formé entre l'axe longitudinal de la colonne de déversement (36) et l'axe de rotation de la couronne rotative (42).

3. Dispositif de déchargement (26) selon la revendication 1 ou 2, **caractérisé en ce que** le bord supérieur de la colonne de déversement (36) est incliné selon un angle vers l'arrière dans le sens opposé au sens de déplacement du véhicule, et **en ce que** cet angle coïncide avec l'angle entre les surfaces de l'élément intermédiaire (40'), les deux angles formant deux angles opposés.

4. Dispositif de déchargement (26) selon l'une quelconque des revendications 1 à 3, **caractérisé en ce qu'**en alternative, en lieu et place de l'élément intermédiaire (40') entre la colonne de déversement (36) et le palier de rotation, un autre élément intermédiaire (40) peut être inséré ou est inséré, dont la surface en appui contre la colonne de déversement (36) et la surface en appui contre la couronne rotative (42) sont orientées parallèlement l'une à l'autre.

5. Machine de récolte (10), en particulier ensileuse, comportant un dispositif de déchargement (26) selon l'une des revendications précédentes.
